# EUROPEAN PATENT APPLICATION

(11) **EP 3 340 070 A1**
(43) Date of publication of application: **27.06.2018**
(21) Application number: 16290245.6
(22) Date of filing: 21.12.2016
(51) Int. Cl.: G06F 17/27, G06F 3/023

(54) **IMPROVED TEXT INPUT**

(71) Applicant: Doro AB, 226 43 Lund (SE)
(72) Inventor: Bel, Pierre-Yves, 77184 Emerainville (FR)
(74) Representative: Ström & Gulliksson AB

(57) **Abstract**

A text input device comprising a controller, a memory, and a display, wherein the controller is configured to: receive a selection of a category; display at least one candidate from said category; receive a selection of one of said displayed at least one candidate; and display said selected candidate as input text; wherein each candidate comprise at least one complete word and wherein at least one of said at least one candidates comprise more than one complete word

## Description

### TECHNICAL FIELD

This application relates to a method, a text input device and a computer-readable storage medium for improved text input.

### BACKGROUND

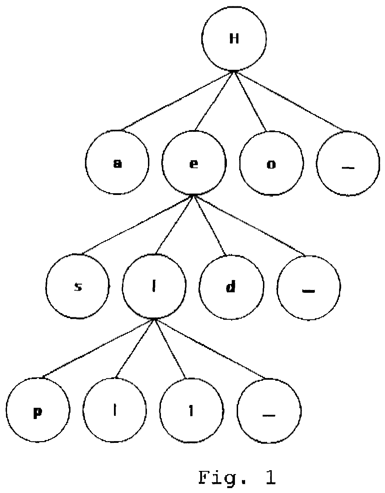

Predictive text input works by grouping or arranging words according to the letters making up the word. In this manner it is possible to predict a next most likely letter or character to be input based on the previous one. For example, for the letter 'H' the next most likely candidates are 'a', 'e', 'o' and so on. A user inputting the letter 'H' will then most likely want to input one of the most likely candidates and to speed up the input these letters may be proposed for input directly. A tree is generated as in figure 1 showing a predictive text input tree.

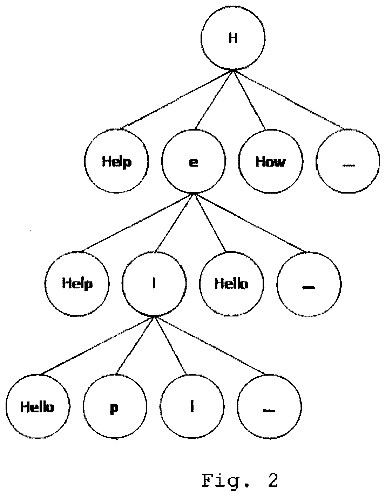

Predictive word input works in a similar manner, both for word completion as well as for predicting the next word, by enabling a candidate to also be a word. If it is noted that the most likely word to be input when inputting the letter 'H' is 'Help' this word can be displayed as one candidate (as an example of word completion). Also other words may be displayed as candidates, see figure 2 showing a candidate tree for word completion.

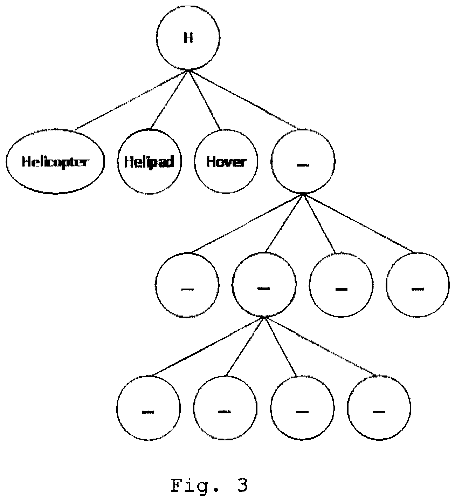

However, even though predictive word input is useful in speeding up the input, it still has a problem namely that many words, however likely to occur in general, many times are highly unlikely given the context of what is being input. In a discussion on cooking the word "saw" would be a very unlikely candidate, whereas the word "sauté" would be a more likely candidate for the letter combination "sa", even though "sauté" is in general a much less used word than "saw". The example of figure 3 shows an example for a discussion on helicopters when inputting the letter 'H'. As can be seen, the candidates "Hello", "Help" et.c. have been replaced by helicopter relevant words, "Helicopter", "Helipad" and so on.

To overcome this some context aware input systems have been developed, where the candidates are selected or re-ranked based on the given context. Various techniques have been developed for determining the context of what is being input and based on this present the most likely candidates. However, such techniques are difficult to hardcode as there exist so many different contexts and the semantic rules are also different for different languages. Such semantic predictive systems thus require vast resources, both in designing and for implementing and executing. This is mainly because they are dynamic. They are also difficult to apply to different languages as different languages have different semantic rules, and as such new models must be designed for different languages.

There is as such a need for an improved text input manner, which manner may be used for many different languages without significant modifications being required.

### SUMMARY

The invention proposes to provide a phrase board where phrases are grouped into different categories, wherein each category is specific to a specific context.

Furthermore, the inventors have realized that by identifying a few key contexts for inputting text, one is able to hardcode the most likely words to be used.

To overcome or at least mitigate the problems discussed herein, the inventors propose to provide a text input device comprising a controller, a memory, and a display, wherein the controller is configured to: receive a selection of a category; display at least one candidate; receive a selection of one of said displayed at least one candidate; and display said selected candidate as input text; wherein each candidate comprise at least one complete word and wherein at least one of said at least one candidates comprise more than one complete word.

According to a second aspect, in order to overcome or at least mitigate the problems discussed herein, the inventors propose to provide a method for use in a text input device comprising a controller, a memory, and a display, wherein the method comprises: receiving a selection of a category; displaying at least one candidate; receiving a selection of one of said displayed at least one candidate; and displaying said selected candidate as input text; wherein each candidate comprise at least one complete word and wherein at least one of said at least one candidates comprise more than one complete word

According to a third aspect, in order to overcome or at least mitigate the problems discussed herein, the inventors propose to provide a computer-readable storage medium encoded with instructions that, when executed on a processor, perform the method according to above and herein.

### BRIEF DESCRIPTION OF FIGURES

The teachings herein will be described in further detail under reference to the accompanying drawings in which:
Figure 1 shows a predictive text input tree according to prior art;
Figure 2 shows a predictive text input tree for word completion according to prior art;
Figure 3 shows a predictive text input tree for context according to prior art;
Figure 4 showing a general candidate tree and an example candidate tree with examples of candidates according to one embodiment of the teachings presented herein;
Figure 5 shows a schematic overview of a text input device adapted according to the teachings herein;
Figure 6 shows a schematic view of the general structure of a text input device adapted according to the teachings herein;
Figure 7 shows a flow chart for a general method according to the teachings herein;
Figures 8A, 8B and 8C each shows a part of the operation of a text input device having been adapted according to the teachings herein;
Figure 9 shows an example, where the category QUESTION has been selected as part of the operation of a text input device having been adapted according to the teachings herein; and
Figure 10 shows a schematic view of a computer-readable storage medium for storing instructions that when executed in a text input device, adapts the text input device according to the teachings herein.

### DETAILED DESCRIPTION

The disclosed embodiments will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout.

The inventors propose to work on the insightful and inventive reasoning that for a group of users, such as technically inapt users for which a quick and easy text input requiring as little knowledge about the system as possible and as few key presses as possible would be highly appreciated, most texts would be written within a very limited set of contexts and these contexts may be grouped under specific input categories, this in order to provide a text input manner which both reduces the number of key presses required and also provides a text input manner that is easy to modify to different languages and which requires only a fraction of the development and design as a true context based input would.

By grouping common phrases according to their categories and identifying which words in the various phrases are common and ranking these on their frequency or likelihood of use, an improved manner for text input is provided.

Much of the underlying functionality may even reuse or be combined with existing predictive input systems, by simply exchanging the candidates for new ones.

The categories may be related to a specific task, a context, an action or simply commonly used phrases. Examples of categories are QUESTION, AFFIRMATION, FOOD, LOCATION and COMMUNICATION. Some common examples of phrases are given below for some of these example categories, where an earlier phrase stem is common to many phrases.

| Category | Phrase stem 1 | Phrase stem 2 | Phrase stem 3 |
|---|---|---|---|
| QUESTION | How | do you feel? | |
| | | are you? | |
| | When | will you | come? |
| | | | finish? |
| | | does | it start? |
| | | | it end? |
| | Are | you | home? |
| | | | awake? |
| | | | working? |
| | Do you | need | something? |
| | | | help? |
| | | want to | see a movie |
| | | have | have a drink |
| AFFIRMATION | I am | here | |
| | | leaving | |
| | | Happy | |
| | Yes | that's right | |
| | | you may | |
| LOCATION | Which | way | to go |
| | | train | to take |
| | Where | are you? | |
| | | is it? | |

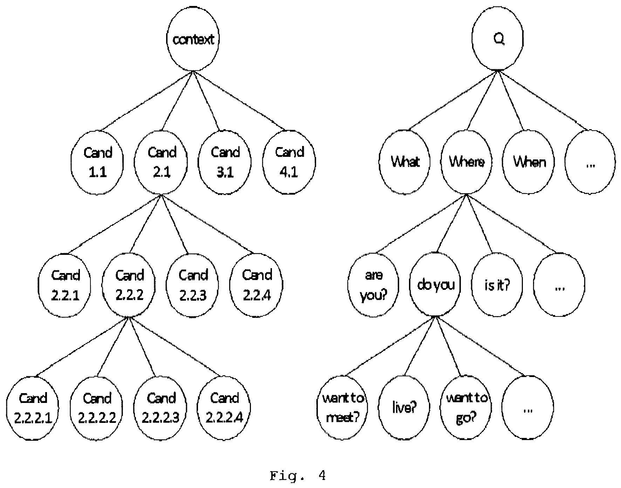

By assigning each phrase stem as a lower candidate, a phrase input candidate tree may be constructed, see figure 4 showing a general candidate tree and one with examples of candidates.

So, by enabling the user to actively selecting a given context (out of a plurality of given options), a text input device may then propose the most common manners of starting a phrase in such a context and then propose further candidates, namely the next most likely candidates, that may be an end of the phrase or a further building block or phrase stem of the phrase. This allows for a quick input of complete phrases.

This also allows for easier guiding of a technically inapt person whose physical sensory input system may be stressed due to lack of experience or perhaps a physical disability.

This also allows for easier migration of a text input system into another language.

Thus, through the insightful insight discussed above of taking a step back from highly advanced analytical tools, one is able to provide a more reliable and easy to use text input system, that also works fast, if not faster, than contemporary systems and that is easy to migrate between languages.

It also allows for an easy update or change of context by simply amending the corresponding candidate tree.

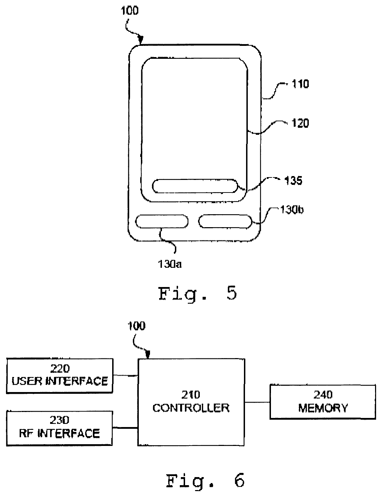

Figure 5 shows a schematic overview of a text input device 100 adapted according to the teachings herein. In the embodiment shown the text input device is a mobile phone 100. In other embodiments the mobile communications terminal 100 such as a computer tablet, a laptop computer, a personal digital assistant, a media player, a location finding device or any hand-held device capable of receiving text input. The mobile phone 100 comprises a housing 110 in which a display 120 is arranged. In one embodiment the display 120 is a touch display. In other embodiments the display 120 is a non-touch display. Furthermore, the mobile phone 100 of this example embodiment comprises two keys 130a, 130b. In this embodiment there are two keys 130, but any number of keys, including none, is possible and depends on the design of the mobile phone 100. In one embodiment the mobile phone 100 is configured to display and operate a virtual key 135 on the touch display 120. It should be noted that the number of virtual keys 135 are dependent on the design of the mobile phone 100 and an application that is executed on the mobile phone 100.

In one embodiment the communications terminal 100 comprises an ITU-T keypad or a QWERTY (or equivalent) keypad in addition to or as an alternative to a touch-sensitive display. In one embodiment where the keypad is an alternative to a touch-sensitive display, the display 120 is a non-touch-sensitive display.

The mobile phone may be navigated through touch input (if the display 120 is a touch display) or input using physical keys 130 or a combination of the two. In the description below there will be made no difference between use of physical keys to scroll between labels such as soft key labels or other manners of presenting options, and the use of virtual keys.

The mobile phone 100 may thus be arranged to receive text input through physical keys 130, virtual keys 135 or a combination of the two.

Figure 6 shows a schematic view of the general structure of a text input device 100 according to figure 1. The text input device 100 comprises a controller 210 which is responsible for the overall operation of the text input device 100 and is preferably implemented by any commercially available CPU ("Central Processing Unit"), DSP ("Digital Signal Processor") or any other electronic programmable logic device. The controller 210 is implemented using instructions that enable hardware functionality, for example, by using computer program instructions executable in a general-purpose or special-purpose processor that may be stored on a computer readable storage medium (disk, memory etc) 240 to be executed by such a processor. The controller 210 is configured to read instructions from the memory 240 and execute these instructions to control the operation of the text input device 100. The memory 240 may be implemented using any commonly known technology for computer-readable memories such as ROM, RAM, SRAM, DRAM, CMOS, FLASH, DDR, EEPROM memory, flash memory, hard drive, optical storage or any combination thereof. The memory 240 is used for various purposes by the controller 210, one of them being for storing application data and various software modules in the mobile terminal. The software modules include a real-time operating system, an application handler as well as various applications. The applications are sets of instructions that when executed by the controller 210 control the operation of the text input device 100.

The text input device 100 further comprises drivers for a user interface 220, which in the text input device 100 of figure 1 is comprised of the display 120, the keys 130, 135, a microphone and a loudspeaker. The user interface (UI) drivers 220 also includes one or more hardware controllers, which together with the UI drivers cooperate with the display 120, keypad 130, as well as various other I/O devices such as microphone, loudspeaker, vibrator, ringtone generator, LED indicator, etc. As is commonly known, the user may operate the mobile terminal through the man-machine interface thus formed.

The text input device 100 may further comprise a radio frequency interface 230, which is adapted to allow the text input device to communicate with other communication terminals in a radio frequency band through the use of different radio frequency technologies. Examples of such technologies are W-CDMA, GSM, UTRAN, LTE and NMT to name a few.

The text input device 100 may be configured to store software for handling a candidate tree as well as the candidate tree in the memory 240. Such software and candidate tree(s) may be downloaded through the RF interface to be stored in the memory 240.

The software and candidate tree(s) may also or alternatively be stored at a remote location, such as in a server, whereby the controller would query that remote location for further data. For the context of this application no difference will be made between querying a local or remote memory location.

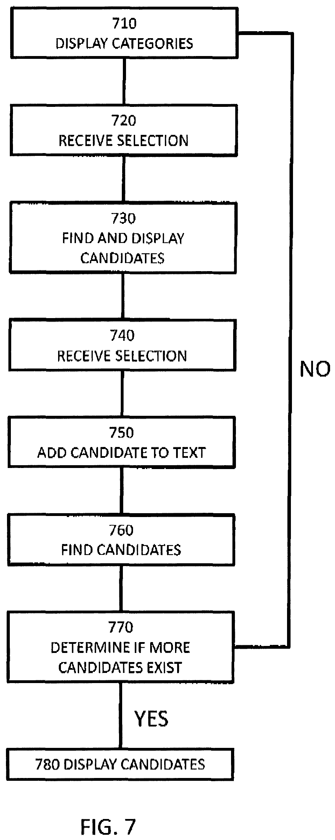

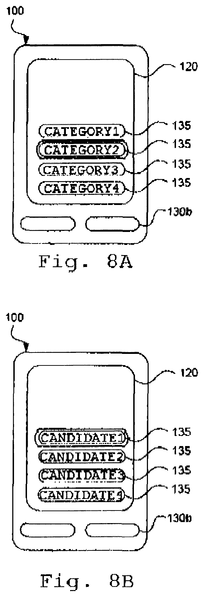

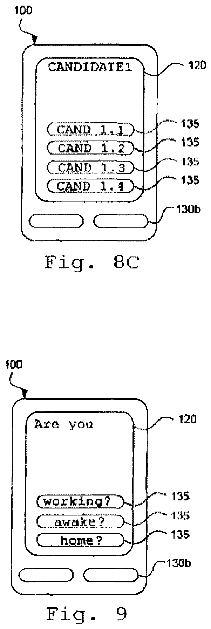

The operation of a text input device 100 having been adapted according to the teachings herein will now be discussed with simultaneous reference to figure 7 and figures 8. Figure 7 shows a flow chart for a general method according to the teachings herein. Figures 8A, 8B and 8C each shows a part of the operation of a text input device 100 having been adapted according to the teachings herein.

The text input device 100 is configured to display 710 a first list of categories on the display 120 for selection by a user, the text input device 100 thereby receiving 720 user input regarding the selection once one has been made. The categories available for selection may be displayed in response to a text input application being activated, by the user opening a text input feature (such as an internal or external QWERTY keypad) or in another manner indicating that text input is desired or required.

In the example of figure 8A, the categories are displayed as separate virtual keys 135 being displayed in a row, however, it would be clear to a skilled person that many options of how to present these categories exist (scroll down menus, sideways lists, to mention a few) and the displayed manner is simply an example, and this manner only chosen because it illustrates the invention in a clear manner with large, easy to read elements. Also, in this example, the category is selected through the use of a virtual key, but as a skilled person would understand, there are many alternatives to how a category may be selected, such as through softkeys, or designated keys. Furthermore, in this example four example categories are used, but it should be noted that any number of categories may be used.

As has been indicated above and will be indicated below, the categories are predefined in that they are prestored, locally and/or remotely, and as such are always giving a specific context and the user may not end up in a totally unexpected context when inputting words or phrases. Each category corresponds to its own candidate tree (or part of a bigger candidate tree) and as such, no unexpected words will be presented for selection, but the text input will always stay within its intended context.

In figure 8A, the second category is selected as indicated by the double oval. As the controller receives input indicating a selection of a category, the controller 210 is configured to match that input against a candidate tree stored in the memory 240 to find 730 the first candidates to display. Figure 8B shows how available candidates are displayed for user selection as virtual keys 135. As for the display of available categories, this manner of presenting the candidates, and the number of candidates, is only for exemplary purposes and may variations exist.

In figure 8B, the first candidate is chosen as indicated by the double oval. As the controller 210 receives selection 740 of a candidate, the controller 210 is configured to display that candidate as added to the text being input 750 and to match the selected candidate against the candidate tree stored in the memory to find the next candidates 760 and determine 770 if there are further candidate, and if so, display them 780. The controller 210 then returns to receiving a selection of a further candidate as above until no further candidates exist, whereby the controller may display the categories 710 again.

Figure 8C shows the text input device 100 as a candidate has been chosen and added to the text being input. The further candidates are also displayed as virtual keys for further selection.

As seen in figures 8A, 8B and 8C the candidates may be displayed without displaying any keyboard. This enables for the candidates to be displayed at a larger size which makes it easier for users with bad eyesight or motorskills to use the text input system as such it facilitates for use for users with diminished physical capacities.

In one embodiment, primarily directed to input of languages other than English, the controller is also configured to receive an indication or selection of the gender of the user, i.e. the writer, as the words to input may change with the gender of the writer. This indication may be received from a general setting of the user in the text input device, or it may be received through selections of gender from two options displayed on the display.

In one embodiment, also primarily aimed at input of languages other than English, the person that the user is writing to (i.e,, the recipient of the text) may be specifed to be a you person (2^{nd} person, familiar) or a You person (2^{nd} person, polite). For example, the user may specify whether the recipient of the text is a "du" person or a "Sie" person, taking German as an example language. The chosen or indicated form of the person written to may stay the same throughout composition of the message.

Figure 9 shows an example, where the category QUESTION has been selected and the first candidate "Are" and the second candidate "you" has been chosen whereby "Are you" has been added to the text being input and displayed, and the further candidates of "working?, "home?", and "awake?" are displayed.

The controller 210 may at any time receive another selection, such as of a letter or a cancel command or such, in which case such input will be handled before proceeding with further traversal of the candidate tree. For example, should a letter be received, the candidate tree may be traversed based on the already input text in combination with the added letter using normal predictive text. In this manner, the category based input may be used to initiate the text input, but the user may change to normal text input at any time.

The controller is thus further configured to receive text input not relating to a selected category or candidate and in response thereto, match the received text input to the candidate tree to find further candidates, possibly after having adapted the candidate tree, such as by switching candidate tree form a phrase based text input candidate tree to a predictive text input candidate tree.

A category may also be automatically Identified by the user inputting a word being a first candidate for a category. In such an automatic identification of a category, the category specific candidates will be displayed as alternatives to normal text or word input candidates. Alternatively, the normal text or word input candidates are re-ranked along with the category specific candidate.

The controller is thus configured to receive a selection of categories by an automatic identification of the category based on already received text input. The displaying of the categories is thus not mandatory for initiating the category-based predictive phrase input.

The present invention differentiates from the prior art at least in that as a category is chosen or selected it signals that a complete phrase is to be input, not a partial word, and that the combination of candidates results in a complete phrase. The category is representative of a phrase type. And, also at least in that each candidate comprises a complete word and that at least one candidate comprises more than one complete word. A candidate tree is thus a data structure for storing candidates wherein each branch from root to leaf represents a phrase and each node represents a candidate being one or many words.

This grouping of candidates brings about the technical effect in that context dependent phrase input becomes possible in a manner that is easy to implement and to migrate between languages and that may be executed without requiring substantial resources.

It also brings about the benefit that as each branch (root to leaf) corresponds to a phrase, the user will not be offered irrelevant and sometimes surprising candidates that may confuse the user.

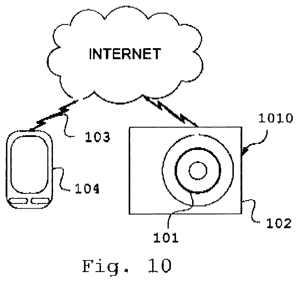

Figure 10 shows a schematic view of a computer-readable storage medium, such as a computer-readable storage medium, as described in the above. The computer-readable medium 1010 is in this embodiment a data disc 1010, being an example of a tangible computer-readable medium. In one embodiment the data disc 1010 is a magnetic data storage disc. The data disc 1010 is configured to carry instructions 101 that when loaded into a controller, such as a processor, executes a method or procedure according to the embodiments disclosed above. The data disc 1010 is arranged to be connected to or within and read by a reading device 102, for loading the instructions into the controller. One such example of a reading device 102 in combination with one (or several) data disc(s) 100 is a hard drive. It should be noted that the computer-readable medium can also be other mediums such as compact discs, digital video discs, flash memories or other memory technologies commonly used.

The instructions 101 may also be downloaded to a computer data reading device 104, such as a mobile communications terminal 104 or other device capable of reading computer coded data on a computer-readable medium, by comprising the instructions 101 in a computer-readable signal 103 which is transmitted via a wireless (or wired) interface (for example via the Internet) to the computer data reading device 104 for loading the instructions 101 into a controller. In such an embodiment the computer-readable signal 103 is one type of a (non-tangible) computer-readable medium 1010.

The instructions may be stored in a memory (not shown explicitly in figure 10, but referenced 240 in figure 2) of the mobile communications terminal 104.

References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

The teachings herein have mainly been described above with reference to a few embodiments. However, as is readily appreciated by a person skilled in the art, other embodiments than the ones disclosed above are equally possible within the scope of the invention, as defined by the appended patent claims.

## Claims

1. A text input device (100) comprising a controller (210), a memory (240), and a display (120), wherein the controller is configured to:
receive a selection of a category;
display at least one candidate;
receive a selection of one of said displayed at least one candidate; and
display said selected candidate as input text; wherein
each candidate comprise at least one complete word and wherein at least one of said at least one candidates comprise more than one complete word.

2. The text input device (100) according to claim 1, wherein said controller (210) is further configured to determine if a further candidate exists, and if so display said further candidate.

3. The text input device (100) according to claim 1 or 2, wherein said controller (210) is further configured to receive said selection of said category as user input.

4. The text input device (100) according to claim 1, 2 or 3, wherein said controller (210) is further configured to receive said selection of said category by receiving input of a word corresponding to a candidate for a corresponding category, thereby selecting the corresponding category as said category.

5. The text input device (100) according to claim 1, 2 or 3, wherein said controller (210) is further configured to receive said selection of said category by displaying a plurality of categories and receiving input indicating a selection of said category.

6. The text input device (100) according to any preceding claim, wherein said category is selected out of a plurality of available categories, wherein said categories are predefined.

7. The text input device (100) according to any previous claim, wherein said controller (210) is further configured to display a candidate as a virtual key (135) and to receive a selection of said candidate as an actuation of said virtual key (135).

8. The text input device (100) according to any previous claim, wherein said controller (210) is further configured to find a candidate by traversing a candidate tree, said candidate tree being a data structure for storing candidates wherein each branch from root to leaf represents a phrase and each node represents a candidate being one or many words.

9. The text input device (100) according to any previous claim, wherein said controller (210) is further configured to receive text input not relating to said selected category or last selected candidate and in response thereto, match the received text input to a candidate tree to find further candidates.

10. The text input device (100) according to claim 9, wherein said controller (210) is further configured to adapt the candidate tree, such as by switching candidate tree from a phrase based text input candidate tree to a predictive text input candidate tree.

11. The text input device (100) according to any previous claim, wherein said controller is further configured to receive an indication of the gender of the user.

12. The text input device (100) according to any previous claim, wherein said controller is further configured to receive an indication of the recipient of the text.

13. The text input device (100) according to any previous claim, wherein said text input device (100) is a smart phone or a tablet computer.

14. A method for use in a text input device (100), wherein the method comprises:
receiving a selection of a category;
displaying at least one candidate;
receiving a selection of one of said displayed at least one candidate; and
displaying said selected candidate as input text; wherein
each candidate comprises at least one complete word and wherein at least one of said at least one candidates comprise more than one complete word.

15. A computer-readable storage medium (1010) encoded with instructions (101) that, when executed on a processor, perform the method according to claim 14.
